Europäisches Patentamt

**European Patent Office**

**Office européen des brevets**

(11) Publication number:

**0 152 828**
A2

(12) # EUROPEAN PATENT APPLICATION

(21) Application number: **85100955.5**

(51) Int. Cl.⁴: **C 12 F 1/08**

(22) Date of filing: **30.01.85**

(30) Priority: **02.02.84 ES 529430**

(43) Date of publication of application: **28.08.85**
Bulletin 85/35

(84) Designated Contracting States: **AT BE CH DE FR GB IT LI LU NL SE**

(71) Applicant: **Carrazon Flores, Emilio, Calle Antonio Maura, 15, Alcazar de San Juan (Ciudad Real) (ES)**

(72) Inventor: **Carrazon Flores, Emilio, Calle Antonio Maura, 15, Alcazar de San Juan (Ciudad Real) (ES)**

(74) Representative: **Lorenz, Eduard et al, Rechtsanwälte Eduard Lorenz - Bernhard Seidler Margrit Seidler - Dipl.-Ing. Hans-K. Gossel Dr. Ina Philipps - Dr. Paul B. Schäuble Dr. Siegfried Jackermeier, Widenmayerstrasse 23 D-8000 München 22 (DE)**

(54) **New distillation and rectification process of alcohols and apparatus for its performance.**

(57) This invention is referred to an alcohol distillation and rectification process, for which an apparatus formed by three interconnected and superposed recipients is used, being the lower one a rectification dispositive provided with an ensemble of communicant vases to use up the product to be distilled, and in whose interior steam at high temperature is being injected in order to arrive the boiling point of the product to be distilled, which passes through the second recipient placed in an intermediate location and superposed to the first one, and endowed with a series of concentration plattes, from which, when the product overflows, it passes through a tubular element toward the rectification recipient, and the produced steams, which carry the highest alcohol concentration, pass to a third recipient, that is located at the top, so that the heaviest alcohols are being purged from this second recipient.

With this process alcohols in very high concentration, as well as with minimum impurities and at a very low cost are being attained.

ACTORUM AG

Emilio Carrazon Flores

## NEW DISTILLATION AND RECTIFICATION PROCESS OF ALCOHOLS AND APPARATUS FOR ITS PERFORMANCE

BRIEF DESCRIPTION OF THE PRESENT INVENTION

The object of the present application for Patent of Invention relates to a "NEW DISTILLATION AND RECTIFICATION PROCESS OF ALCOHOLS AND APPARATUS FOR ITS PERFORMANCE", which provides to its specific function essential characteristics of novelty and efficiency constituting notable advantages over the heretofore known and usual processes and devices.

In the alcohol production industrial sector there had been an imperative need to obtain the distillation of the products to be processed with maximum utilization of the essential or main components of pure alcohol, completely using up the original products with at least possible cost and at a minimum time and, to this end, an exhaustive research was conducted, which resulted in the project and development of the new distillation and rectification process of alcohols in conjuntion with the design of the device for its performance in accordance with the preferred embodiments of the invention herein described in order to illustrate the principles of the invention.

The aforesaid apparatus consists basically of three bodies or recipients intercommunicated and superimposed as the principal elements necessary for the performance of the process that we have devised, with the one sited in the lower part thereof constituting a rectification device, provided with a set of communicating vessels whose main function is using up the product to be distilled, in the interior of which is injected high-temperature steam for the purpose of bringing said product to the boiling point, for example, wine, molasses, wine piquettes and the like, which penetrate through a second recipient, situated in intermediate position superimposed on the first one, its inner space equipped with a series of concentration plates from which the wine, upon overflowing, passes through the appropriate tubular element to the aforesaid rectification recipient, wherein the heating and evaporation process starts.

After this first phase, the vapors produced flow into the aforesaid second recipient dragging the pure alcohol centers, that is, without impurities or aldehydes, carrying out through the upper part of this recipient, by means of the necessary valvular devices, the purging or extraction of the heavier alcohols or anilic oils, which pass to the lower compartment of a collateral cooling tank.

The vapor carriers of the highest alcohol concentration continue rising upwardly toward the third recipient, which occupies the highest part of the three recipients comprising the distillation set, from which point the alcohol flows toward the upper compartment of the cooling tank, in the meantime that the excess vapor containing ethers and aldehydes, which are insoluble, reach the roof of the upper recipient without mixing with the alcohol, passing immediately afterward to a condensating device through the tubular elements

0152828

provided for this purpose, flowing back afterward to the aforesaid rectifier for the final processing in a second phase.

The residues or vinasses deposited at the bottom of the rectification recipient, sited in the base of the aforesaid apparatus, are extracted through a lower valvular outlet.

So as to obtain an optimum result in the wine distillation and alcohol rectification process, the base product consisting of the wine itself is previously mixed with a compound of salt and carbon black at the ratio of 1 to 50 grams per liter, preferably at a 5 to 30 ratio.

Additional objects and advantages will become apparent as the following detailed description of the invention is read in conjuntion with the single accompanying drawing which illustrates the invention, and it will be understood that certain modifications in structure can be effected without departing from these principles.

DETAILED DESCRIPTION OF THE INVENTION

Referring initially to said drawing, shown in the lower part thereof is the rectification recipient -1-, provided internally with a set of communicating vessels, in the enclosure of which the high-temperature steam penetrates through the duct -2- in order to bring to the boiling point the wine mixed with the aforesaid stimulant compound, which activates and carries the distillation to the limit, verifying the passage thereof through the tubular element -3-, passing therefrom through the concentration plates installed in the superimposed recipient -4- and the tubular elements -5-, which take the pooled mixture to the aforesaid rectification recipient -1-, connecting with the receptor vessel -6-.

In the upper part of the second recipient -4-, after the passage therethrough of the vapors originated in the rectification recipient -1-, purging of the heavy alcohols or anilic acids is carried out by means of the valves -7- and -8- and going into the lower compartment -9- of the cooling tank.

The mass alcoholic concentration vapors continue their passage toward the upper recipient -10-, designed to carry out the necessary rectification, where the extraction of alcohol is performed through the valve -11- for its access therefrom to the upper compartment -12- of the cooling device, in the meantime that vapors of ethers and aldehydes, which do not blend with the alcohol concentration for the aforesaid reason pass through the duct -13- to the condensers -14- from where they flow back to the rectification recipient for a second processing.

In the lower part thereof is shown the outflow -15- of vinasses resulting from the performance of the aforementioned process.

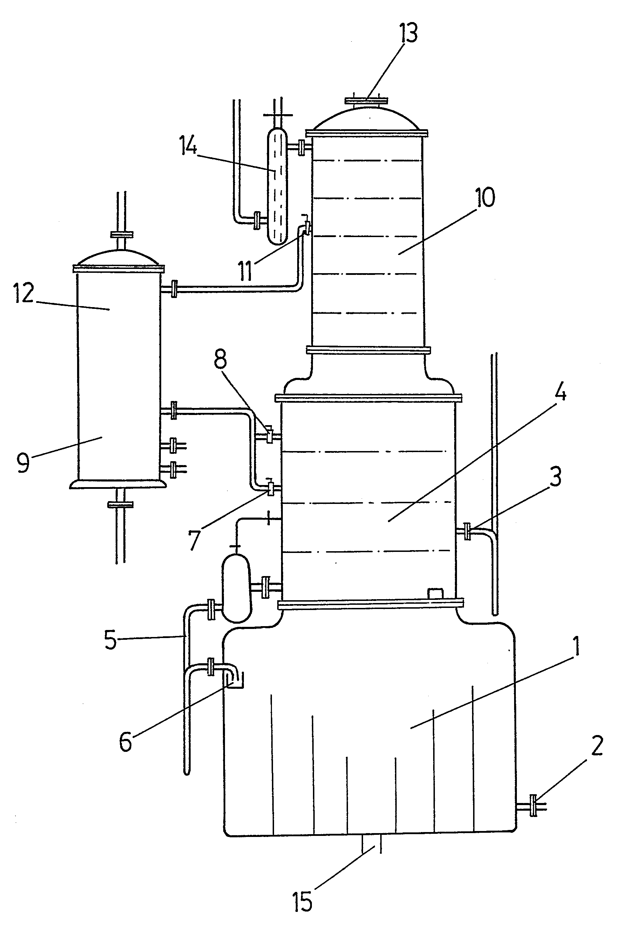

CLAIMS

0152828

The present invention, herein described and declared to be neither disseminated nor practiced in Spain, consists of the following claims:

1. New distillation and rectification process of alcohols and apparatus for its performance, characterized because three bodies or recipients intercommunicated therebetween and in superimposed arrangement principally integrate the aforesaid device as essential elements for the ideal performance of the process, the recipient sited in the lower part thereof constituting a rectification device provided with a series of communication vessels with the primary function of urging the product to be distilled, injecting into the interior of this recipient high-temperature steam for the purpose of bringing to the boiling point the product to be distilled, for example, wine, molasses, wine piquettes and the like, which are urged to penetrate through a second recipient, situated in the intermediate position of the set of the three said recipients, the recess thereof provided with concentration plates from which the wine, upon overflowing, passes through the appropriate duct to the aforesaid rectification recipient, where the heating and evaporation process starts.

2. New process, as defined in claim 1 and further characterized because, after the initial phase described in the paragraph next above the vapors produced therein flow toward the next recipient, dragging with them the pure alcohol centers, that is, free from impurities or aldehydes, the upper sector of this recipient carrying out for this purpose the purging or extraction of the heavier alcohols or anilic oils, using to this effect the necessary valvular devices, passing therethrough to the lower compartment of a collateral cooling tank.

3. New process, as defined in claims 1 and 2 and further characterized because this second phase having been performed, the vapors, now carriers of the highest concentration of alcohol, continue rising upwardly toward the third recipient, positioned in the highest part, the alcohol flowing therefrom through another valvular element toward the upper compartment of the cooling tank referred to in claim 2.

4. New process, as defined in claims 1 to 3 and further characterized because the excess vapor which contains ethers and aldehydes unmixed with the alcohol due to their insoluble character reach the roof of the upper recipient, passing immediately afterward to a device of condensers by means of the necessary tubular ducts, returning afterward to the rectifier device, or third recipient, for the final processing in a second phase.

5. New process, as defined in claims 1 to 4 and further characterized because the residues or vinasses deposited at the bottom of the rectifier recipient, situated in the base of the said apparatus, are extracted through a lower valvular outlet.

6. New process, as defined in claims 1 to 5 and further characterized because for the purpose of obtaining an optimum result in the wine distillation and alcohol rectification process, the base product formed by the wine itself is previously mixed with a compound of salt and carbon black, at the ratio of 1 to 50 grams per liter, preferably from 5 to 30.

7. NEW DISTILLATION AND RECTIFICATION PROCESS OF ALCOHOLS
   AND DEVICE FOR ITS PERFORMANCE: